# EUROPÄISCHE PATENTSCHRIFT

(11) **EP 3 009 177 B1**
(45) Veröffentlichungstag und Bekanntmachung des Hinweises auf die Patenterteilung: **21.06.2017**
(21) Anmeldenummer: 15188687.6
(22) Anmeldetag: 07.10.2015
(51) Int. Cl.: B01D 1/20, B01D 3/00, B05B 1/04, B01D 53/18

(54) **FLÜSSIGKEITSVERTEILER EINER VERFAHRENSTECHNISCHEN KOLONNE**
LIQUID DISTRIBUTOR OF A PROCESS TECHNOLOGY COLUMN
DISTRIBUTEUR DE LIQUIDE D'UNE COLONNE TECHNOLOGIQUE

(30) Priorität: 16.10.2014 DE 102014115077
(43) Veröffentlichungstag der Anmeldung: 20.04.2016
(73) Patentinhaber: RVT Process Equipment GmbH, 96349 Steinwiesen (DE)
(72) Erfinder: Geipel, Werner, 96347 Steinwiesen (DE); Franz, Uwe, 96346 Wallenfels (DE)
(74) Vertreter: WSL Patentanwälte Partnerschaft mbB

(56) Entgegenhaltungen:
- DE-A1- 2 435 704
- DE-A1- 3 100 004
- DE-A1- 3 802 718
- DE-A1- 10 021 264
- DE-A1-102007 000 705
- DE-B- 1 105 389
- US-A1- 2010 089 232

## Beschreibung

Die vorliegende Erfindung betrifft einen Flüssigkeitsverteiler einer verfahrenstechnischen Kolonne, wobei der Flüssigkeitsverteiler eine Flüssigkeitszuführung zum Leiten einer Flüssigkeit und wenigstens 2 damit verbundene Düsen zur Erzeugung jeweils eines Flüssigkeitsstrahls aufweist. Darüber hinaus betrifft die vorliegende Erfindung eine den Flüssigkeitsverteiler umfassende verfahrenstechnische Kolonne und ein Verfahren zum Aufreinigen oder Auftrennen eines Flüssigkeitsgemisches in einer verfahrenstechnischen Kolonne, wobei das Flüssigkeitsgemisch über den Flüssigkeitsverteiler aufgegeben wird.

Die verfahrenstechnische Aufreinigung oder Auftrennung von Flüssigkeitsgemischen erfolgt Großteils in Kolonnen. In diesen Trennapparaten erfolgt ein Stoffaustausch zwischen einer aufsteigenden Gasphase und einer von oben nach unten ablaufenden Flüssigkeit. Die Apparate enthalten verschiedene Einbauten unterschiedlicher Funktionalität. Erfolgt die Aufreinigung bzw. Trennung des Flüssigkeitsgemisches mittels Füllkörperschüttungen und/oder Packungen, so müssen diese durch geeignete Flüssigkeitsverteilvorrichtungen berieselt werden. Um einen intensiven Stoffaustausch zwischen den Phasen sicherzustellen, muss der Flüssigkeitsstrom gleichmäßig auf dem Kolonnenquerschnitt verteilt werden.

Bei den hierfür eingesetzten Flüssigkeitsverteilern sind verschiedene Bauarten bekannt, so z. B. Verteilerböden, Rinnenverteiler, Rohrverteiler und Düsenverteiler. Die Flüssigkeitsverteilung erfolgt hierbei entweder über die Stauhöhenverteilung durch Bohrungen im Boden des Verteilers (Verteilerböden) oder seitlich gebohrte Aufgaberöhrchen, Überlaufverteilung durch seitliche Schlitze oder Überlauftüllen (Rinnenverteiler) oder Düsen (Düsenverteiler), und jede der genannten Alternativen hat ihre spezifischen Vor- und Nachteile. So ist z.B. DE102007000705A1 bekannt worin die Flüssigkeit auf Teller gesprüht wird. Viele Verteilerböden verringern den freien Querschnitt der Kolonne im Bereich des Verteilerbodens signifikant und können zu einem entsprechenden gasseitigen Druckverlust führen. Der Arbeitsbereich von Rinnenverteilern ist begrenzt, da die Flüssigkeit alleine über die Schwerkraft der angestauten Flüssigkeit durch Ablaufbohrungen aufgegeben wird, und um den Volumenstrom in Grenzen zu halten, sind daher häufig relativ kleine Bohrungsdurchmesser erforderlich, die sich bei verschmutzten Flüssigkeiten, wie z. B. in Raffinerien, leicht zusetzen können. Der Arbeitsbereich von Düsenverteilern ist im Vergleich zu dem von Rinnenverteilern größer, da über die Einstellung des gewünschten Vordrucks in den Düsen hier mehr Variabilität besteht, und die kreisrunden Spritzbilder der üblicherweise eingesetzten Vollkegeldüsen sind überlappend angeordnet, so dass über den gesamten Querschnitt der Kolonne die aufzutrennende Flüssigkeit aufgesprüht wird. Die dabei erzeugten feinen Tröpfchen werden vom in der Kolonne aufsteigenden Gasstrom jedoch leicht mitgerissen und gelangen somit teilweise nicht direkt auf die Füllkörper bzw. Packungen, so wie es eigentlich beabsichtigt ist.

Mit der vorliegenden Erfindung sollte daher die Aufgabe gelöst werden, einen neuartigen Flüssigkeitsverteiler für eine verfahrenstechnische Kolonne bereitzustellen, wobei der Flüssigkeitsverteiler möglichst unempfindlich gegenüber Schmutz- bzw. Festkörperfracht in der aufzureinigenden bzw. aufzutrennenden Flüssigkeit sein soll. Außerdem soll der Flüssigkeitsverteiler über einen möglichst großen Lastbereich gefahren werden können. Gleichzeitig sollte gewährleistet sein, dass die Geometrie des Flüssigkeitsverteilers nicht zu einem zu großen Druckverlust der Gasphase oder zu einer ungleichmäßigen Gasverteilung führt, und die Verteilung der Flüssigkeit mit dem erfindungsgemäßen Flüssigkeitsverteiler sollte so erfolgen, dass die aufgegebene Flüssigkeit möglichst wenig durch den in der Kolonne aufsteigenden Gasstrom mitgerissen wird.

Diese Aufgabe wird dadurch gelöst, dass die Düsen zur Erzeugung der Flüssigkeitsstrahlen bei dem erfindungsgemäßen Flüssigkeitsverteiler dadurch gekennzeichnet sind, dass es sich hierbei um Flachstrahldüsen handelt, die jeweils einen Flachstrahl erzeugen, wobei die Flachstrahldüsen so ausgerichtet sind, dass der von diesen erzeugte Flachstrahl auf ein am Flüssigkeitsverteiler angeordnetes Ablaufelement trifft, an dem die Flüssigkeit des Flachstrahls ablaufen kann.

Unter einer Flachstrahldüse ist hier eine hydraulische Düse zu verstehen, bei der die unter Druck stehende Flüssigkeit derart durch eine kleine Öffnung gepresst und mit hoher Geschwindigkeit nach außen geschleudert wird, dass dabei auf einer Ebene, auf welcher der geometrische Mittelpunkt des Strahls allseits senkrecht auftrifft, ein Spritzbild entsteht, dessen Querschnittsfläche in einer Dimension (Breitseite) deutlich länger ist als in der anderen Dimension (Schmalseite). Dabei ist es unerheblich, welche geometrische Form die Querschnittsfläche genau darstellt, sei es beispielsweise elliptisch oder eckig. Entscheidend ist lediglich, dass das Verhältnis von Breitseite zu Schmalseite wenigstens 3:1 beträgt. Vorzugsweise beträgt das Verhältnis Breitseite zu Schmalseite wenigstens 4:1, wenigstens 5:1, wenigstens 10:1 oder gar wenigstens 20:1. Auch die Bauart der Flachstrahldüse ist grundsätzlich frei wählbar, solange ein Flachstrahl mit den oben genannten Eigenschaften hierdurch erzeugt wird. Beispiele für erfindungsgemäß einsetzbare Flachstrahldüsenbauarten sind Schlitzdüsen, Pralldüsen oder Schrägstrahldüsen.

Einer der Vorteile eines flachen Strahls besteht darin, dass hierdurch die Konstruktion von Flüssigkeitsverteilern möglich ist, die relativ wenig Querschnittsfläche einnehmen und somit einen hohen freien Querschnitt in der Kolonne gewährleisten, was wiederum einen geringen gasseitigen Druckverlust bedeutet. Dies gilt insbesondere für die Ausführungsformen, bei denen die Flüssigkeit entlang wenigstens einer Linie auf die darunter liegenden Füllkörper abgegeben wird (Linienverteiler), wobei die Flachstrahldüsen in einer Reihe auf der wenigstens einen Linie des Linienverteilers angeordnet sind, und wobei zwischen mehreren nebeneinander angeordneten Linien eines Linienverteilers in der Kolonne aufsteigendes Gas ungebremst hindurchströmen kann. Demenstsprechend sind bei einer bevorzugten Ausführungsform die Flachstrahldüsen in wenigstens einer Reihe angeordnet, wobei die Flachstrahldüsen in der wenigstens einen Reihe so ausgerichtet sind, dass die Längsseiten der von diesen erzeugten Flüssigkeitsstrahlen auf einer Linie verlaufen.

Darüber hinaus bietet der Flachstrahl weniger Angriffsfläche für in der Kolonne aufsteigende Gase als der Strahl einer Vollkegeldüse, so dass die Gefahr des Tropfenmitrisses beim Flachstrahl reduziert ist. Erfindungsgemäß wird der Tropfenmitriss zusätzlich dadurch minimiert, dass die Flachstrahldüsen so ausgerichtet sind, dass der von diesen erzeugte Flachstrahl auf ein am Flüssigkeitsverteiler angeordnetes Ablaufelement trifft, an dem die Flüssigkeit des Flachstrahls ablaufen kann. Sobald der unter Druck aus der Düse austretende Flachstrahl aufgrund seiner sich verringernden kinetischen Energie Gefahr läuft von aufsteigendem Gasstrom nach oben mitgerissen zu werden, trifft der Strahl erfindungsgemäß auf das am Flüssigkeitsverteiler angeordnete Ablaufelement, an dem die Flüssigkeit dann vor dem aufsteigenden Gasstrom geschützt ablaufen kann. Zweckmäßigerweise ist das Ablaufelement so gestaltet und so am Flüssigkeitsverteiler angeordnet, dass der darauf auftreffende Flachstrahl vollflächig aufgenommen wird. Daher ist das Ablaufelement erfindungsgemäß integraler Bestandteil des Flüssigkeitsverteilers und so angeordnet, dass gewährleistet ist, dass der Flüssigkeitsstrahl im Regelbetrieb stets in einem vorbestimmten Winkel vollflächig auf das Ablaufelement trifft.

Der erfindungsgemäße Flüssigkeitsverteiler ist im Kolonneninnenraum der verfahrenstechnischen Kolonne über den übrigen Kolonneneinbauten und/oder den darin angeordneten Packungen und/oder Füllkörpern angeordnet. Die Flachstrahldüsen des erfindungsgemäßen Flüssigkeitsverteilers sind dementsprechend üblicherweise so angeordnet, dass sie jeweils einen nach unten gerichteten Flüssigkeitsstrahl erzeugen.

Der erfindungsgemäße Flüssigkeitsverteiler weist wenigstens 2 Flachstrahldüsen auf. Bei bestimmten Ausführungsformen der Erfindung weist der Flüssigkeitsverteiler wenigstens 3 Flachstrahldüsen, wenigstens 5 Flachstrahldüsen oder wenigstens 10 Flachstrahldüsen auf.

Vorzugsweise stellt der erfindungsgemäße Flüssigkeitsverteiler wenigstens 1 Flachstrahldüse pro m² Kolonnenquerschnitt bereit. Die Anzahl der Flachstrahldüsen kann aber auch deutlich größer sein. Für die meisten eingesetzten Kolonnen wird die Anzahl der Flachstrahldüsen zweckmäßigerweise in dem Bereich von 1 bis 20/m² liegen, vorzugsweise in dem Bereich von 1 bis 5/m².

Um eine möglichst breite Flüssigkeitsverteilung zu erreichen, sollte der Spritzwinkel (β), der an der Breitseite der erfindungsgemäßen Flachstrahldüsen erreicht wird, möglichst groß sein. Vorzugsweise beträgt der Spritzwinkel (β) wenigstens 30°, noch bevorzugter wenigstens 45° und bis zu 120° oder gar bis zu 150°.

Die Zuführung der Flüssigkeit zu den Düsen erfolgt über eine Flüssigkeitszuführung, die zum Leiten der jeweils eingesetzten Flüssigkeit zu den Düsen geeignet ist. Die Kapazität der Flüssigkeitszuführung ist dabei auf den gewünschten Volumenstrom abgestimmt. Beispielsweise liegt der Volumenstrom V (l/min.) bei einem Druck p von 1 bar bei bestimmten Ausführungsformen in dem Bereich von 2 bis 20 l/min/Düse.

Die Einstellung der Flüssigkeitszufuhr (Menge) für die einzelnen Düsen erfolgt vorzugsweise durch in der Flüssigkeitszuführung am Übergang zu der jeweiligen Flachstrahldüse vorgesehene Blenden oder andere Einstellvorrichtungen zur Mengenregulierung.

Sind die Flachstrahldüsen der vorliegenden Erfindung auf einer Linie angeordnet, werden dabei die Parameter Flüssigkeitsmenge, Druck, Spritzbild, Abstand der Düse zur Ablauffläche und Druck vom Fachmann leicht so eingestellt, dass das Ablaufelement über die gesamte Strecke der Linie mit Flüssigkeit benetzt wird.

Das erfindungsgemäß vorgesehene Ablaufelement muss dazu geeignet sein, die darauf auftreffende Flüssigkeitsmenge aufzunehmen, so dass die aufgenommene Flüssigkeit entweder auf der Oberfläche des Ablaufelementes filmartig ablaufen kann oder in eine porenartige Struktur des Ablaufelementes aufgenommen wird, um dieses anschließend nach unten hin zu durchströmen. Bei einer Ausführungsform der vorliegenden Erfindung ist das Ablaufelement dementsprechend in Form einer geschlossenen Ablauffläche vorgesehen, auf der die Flüssigkeit filmartig ablaufen kann, ohne in das Material einzudringen. Bei einer alternativen Ausführungsform besteht das Ablaufelement aus einem porösen Material, in das die Flüssigkeit eindringen und das sie durchströmen kann. Bei einer weiteren alternativen Ausführungsform ist das Ablaufelement ein Packungselement, in dessen Netzwerk die Flüssigkeit eindringen kann, um das Netzwerk weiter unten wieder zu verlassen.

Die im Zusammenhang mit der vorliegenden Erfindung verwendeten porösen Materialien sind Materialien, deren Porosität einen Anteil an offener Porosität aufweist, damit das Material die Flüssigkeit des Flüssigkeitsstrahls wenigstens zum Teil aufnehmen kann. Vorzugsweise handelt es sich bei den bei der vorliegenden Erfindung verwendeten porösen Materialien um Materialien deren Gesamtporosität einen Anteil von wenigstens 10% an offener Porosität aufweist. Noch bevorzugter weist das Material einen Anteil an offener Porosität von wenigstens 20%, wenigstens 30%, wenigstens 40% oder wenigstens 50% auf.

Vorzugsweise handelt es sich bei den bei der vorliegenden Erfindung verwendeten porösen Materialien um Materialien mit einer mittleren Porengröße im Bereich von 0,01 bis 10 mm. Bei bevorzugten Ausführungsformen der Erfindung beträgt die mittlere Porengröße wenigstens 0,10 mm, wenigstens 0,25 mm oder wenigstens 0,50 mm. Die Obergrenze der mittleren Porengröße liegt vorzugsweise bei 2,5 mm, 5,0 mm oder 7,5 mm oder 10 mm.

Bei den Ausführungsformen, bei dem das erfindungsgemäße Ablaufelement in der Form einer Packung vorgesehen ist, liegt diese in Form einer strukturierten Packung aus dünnen, gewellten und gelochten Metallplatten bzw. Drahtnetzen vor. Die hydraulischen Durchmesser der verwendeten Elemente liegen in dem Bereich von 1 bis 50 mm, vorzugsweise in dem Bereich von 3 bis 20 mm.

Grundsätzlich trifft der von der Flachstrahldüse erzeugte Flachstrahl mit seiner Breitseite in einem Auftreffwinkel (α) in dem Bereich von 1° bis 75° auf die Oberfläche des Ablaufelements. Vorzugsweise beträgt der Auftreffwinkel (α) jedoch 3° oder mehr, 5° oder mehr, 10° oder mehr oder gar 15° oder mehr. Bei bevorzugten Ausführungsformen ist der Auftreffwinkel (α) nach oben hin mit bis zu 60° oder weniger, bis zu 45° oder weniger, bis zu 30° oder weniger oder bis zu 20° oder weniger beschränkt.

Die vertikale Differenz zwischen der Höhe der Düsenaustrittsöffnung und der Höhe des geometrischen Mittelpunkts der Querschnittsfläche des auf das Ablaufelement auftreffenden Flüssigkeitsstrahles liegt anwendungsbedingt vorzugsweise bei wenigstens 5 cm. Bei bestimmten Ausführungsformen beträgt die vertikale Differenz maximal 80 cm. Bei besonders bevorzugten Ausführungsformen beträgt die Differenz 8 cm oder mehr, 10 cm oder mehr oder 20 cm oder mehr. Bei besonderen Ausführungsformen ist die vertikale Differenz nach oben hin auf 60 cm oder weniger oder nur 30 cm oder weniger beschränkt.

Bei den Ausführungsformen, bei denen das Ablaufelement in Form einer Ablauffläche vorgesehen ist, auf die der von der Flachstrahldüse erzeugte Flachstrahl mit seiner Breitseite trifft, geschieht dies vorzugsweise in einem Auftreffwinkel (α) in dem Bereich von 1° bis 60°. Bei diesen Ausführungsformen beträgt der Auftreffwinkel vorzugsweise 3° oder mehr, 5° oder mehr, 10° oder mehr oder 15° oder mehr, und maximal bis 45° oder weniger, bis 30° oder weniger oder nur bis 20° oder weniger.

Nach dem Auftreffen des Flachstrahls auf eine Ablauffläche kommt es üblicherweise zu einer weiteren Auffächerung des dabei entstehenden Flüssigkeitsfilms. Dieser Film kann jedoch hin und wieder zumindest abschnittsweise eine gewisse Inhomogenität zeigen, und bei bestimmten Ausführungsformen, bei denen das Ablaufelement eine Ablauffläche ist, ist daher in der Ablauffläche oder an der unteren Kante der Ablauffläche in Längsrichtung der Kante ein Längsaustauschelement zum Längsaustausch des an der Ablauffläche ablaufenden Flüssigkeitsfilms vorgesehen. Typischerweise verläuft das Längsaustauschelement horizontal und damit zumeist parallel zu der unteren Kante der Ablauffläche. Das Längsaustauschelement gewährleistet durch den Längsaustausch des an der Ablauffläche ablaufenden Flüssigkeitsfilms die zuverlässige Vergleichmäßigung der ablaufenden Flüssigkeit.

Bei bevorzugten Ausführungsformen ist das Längsaustauschelement eine Rinne, ein poröses Material oder ein Packungselement. Bei den Ausführungsformen, bei denen das Längsaustauschelement in Form einer Rinne vorgesehen ist, weist diese vorzugsweise eine Überlaufkante und/oder Ausnehmungen auf, über die die Flüssigkeit aus der Rinne ablaufen kann. Bei einer alternativen Ausführungsform, bei der das Längsaustauschelement als eine Rinne vorgesehen ist, geht deren Überlaufkante in eine Abtropffläche über, über die die Flüssigkeit ablaufen und an deren Unterkante die Flüssigkeit abtropfen kann. Insbesondere für Flüssigkeiten mit starker Kohäsionskraft, wie z. B. Wasser, ist die Unterkante der Abtropffläche vorzugsweise in Zacken- oder Wellenform gestaltet, so dass sich die über die Abtropffläche ablaufende Flüssigkeit an den Zacken- bzw. Wellenspitzen sammeln und so leichter abtropfen kann.

Um den aus der Flachstrahldüse austretenden Flüssigkeitsstrahl gegenüber im Kolonneninnenraum aufsteigendes Gas zu schützen, wird für bevorzugte Ausführungsformen der Erfindung vorgeschlagen, dass an dem Flüssigkeitsverteiler wenigstens ein Abschirmelement vorgesehen ist, welches wenigstens eine Breitseite des Flachstrahls gegenüber der Umgebung abschirmt. Zweckmäßigerweise ist das Abschirmelement mindestens so breit wie die Breitseite des Flachstrahls und mindestens so lang wie die Flachstrahllänge. Bei den Ausführungsformen, bei denen das Ablaufelement in Form einer Ablauffläche vorgesehen ist, ist das Abschirmelement vorzugweise mindestens so breit und mindestens so lang wie der Flüssigkeitsfilm, der sich aus dem auf das Ablaufelement treffenden Flachstrahl ergibt. Bei verschiedenen Ausführungsformen ist das Abschirmelement in der Form einer geschlossenen Abschirmfläche, in Form eines porösen Abschirmmaterials oder in der Form eines Abschirmpackungselements vorgesehen, wobei die Begriffe geschlossene Fläche, poröses Material und Packung hier so definiert sind, wie oben.

Bei den Ausführungsformen der Erfindung, bei denen an dem Flüssigkeitsverteiler wenigstens ein Abschirmelement vorgesehen ist, ist dies vorteilhafterweise an den beiden Stirnseiten mit dem Ablaufelement so verbunden, dass sich eine nach unten offene, im Übrigen aber allseits geschlossenen Einhausung für den Bereich ergibt, in dem der Flachstrahl erzeugt wird, und je nach Ausführungsform vorzugsweise auch für den Bereich, in dem auf einer Ablauffläche aus dem Flachstrahl ein Flüssigkeitsfilm erzeugt wird.

Bei einer speziellen Ausführungsform der vorliegenden Erfindung trifft der von der Flachstrahldüse erzeugte Flachstrahl auf der einen Seite mit seiner Breitseite in einem Auftreffwinkel (α) von 1° bis 60° auf ein als Ablaufelement vorgesehenes Leitblech, wobei die gegenüberliegende Seite des Flachstrahls von einem Abschirmblech, einer Abschirmlage aus porösem Material oder einer Packungsschicht gegenüber dem Kolonneninnenraum abgeschirmt wird. Auf diese Weise sind die Breitseiten des Flüssigkeitsstrahls gegenüber dem Kolonneninnenraum vollständig abgeschirmt, und bei einer ganz besonders bevorzugten Ausführungsform umfasst diese Abschirmung beidseits auch den Bereich, über den der Flüssigkeitsfilm auf dem Leitblech abläuft.

Der erfindungsgemäße Flüssigkeitsverteiler wird zum Aufgeben einer Flüssigkeit auf eine verfahrenstechnische Kolonne verwendet. Mit der vorliegenden Anmeldung wird daher auch eine verfahrenstechnische Kolonne beansprucht, die einen Flüssigkeitsverteiler der erfindungsgemäßen Art umfasst.

Mit der vorliegenden Anmeldung wird insbesondere ein Verfahren zum Aufreinigen oder Auftrennen eines Flüssigkeitsgemisches mittels in einer verfahrenstechnischen Kolonne angeordneten Packungen oder Füllkörpern beansprucht, wobei das aufzureinigende oder aufzutrennende Flüssigkeitsgemisch auf die Packungen oder Füllkörper über einen Flüssigkeitsverteiler der erfindungsgemäßen Art aufgegeben wird.

Die im Zusammenhang mit der vorliegenden Erfindung eingesetzten Kolonnen sind vorzugsweise Kolonnen zur thermischen Trennung von Flüssigkeitsgemischen. Besonders bevorzugte verfahrenstechnische Kolonnen gemäß der vorliegenden Erfindung sind Absorptions-, Destillations- oder Rektifikationskolonnen.

Für Zwecke der ursprünglichen Offenbarung wird darauf hingewiesen, dass sämtliche Merkmale, wie sie sich aus der vorliegenden Beschreibung, den anhängenden Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Des Weiteren wird darauf hingewiesen, dass es für den Fachmann selbstverständlich ist, dass die anhängenden Figuren und die nachfolgenden Figurenbeschreibungen lediglich dazu dienen, die als Ausführungsbeispiele wiedergegebenen möglichen Ausführungsformen der vorliegenden Erfindung beispielhaft anzugeben. Der Fachmann wird daher ohne Weiteres verstehen, dass darüber hinaus auch alle anderen Ausführungsformen, die die in den Ansprüchen genannten erfindungsgemäßen Merkmale oder Merkmalskombinationen aufweisen, innerhalb des Schutzumfangs der Erfindung liegen. Auf die umfassende explizite Darstellung sämtlicher denkbarer Ausführungsformen wird hier nur der Kürze und der Lesbarkeit der Beschreibung wegen verzichtet.

### Figurenbeschreibung

Bei den anhängenden Figuren 1 bis 4 handelt es sich um
- Figur 1: eine Querschnittsansicht einer Ausführungsform des erfindungsgemäßen Flüssigkeitsverteilers bei dem der Flüssigkeitsstrahl auf ein Ablaufblech gerichtet ist,
- Figur 2: ein Detail der Flüssigkeitsaufgabe einer speziellen Ausführungsform der vorliegenden Erfindung,
- Figur 3: eine Ausführungsform des erfindungsgemäßen Flüssigkeitsverteilers mit einer alternativen Geometrie und
- Figur 4: Reihenanordnung von Flachstrahldüsen bei einer bestimmten Ausführungsform der Erfindung in Gestalt eines Linienverteilers.

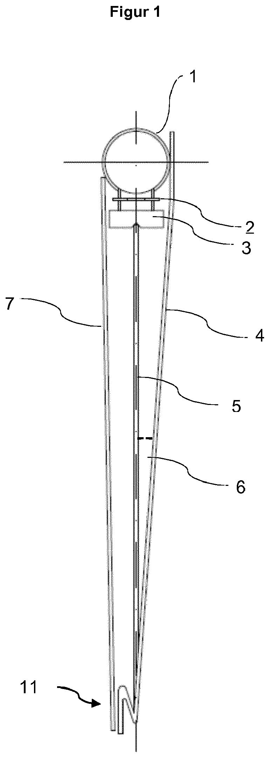

Bei der in Figur 1 dargestellten Ausführungsform wird über eine rohrförmige Flüssigkeitszuführung 1 die auf die Trennkolonne aufzugebende Flüssigkeit zu den Flachstrahldüsen 3 geleitet. Am Übergang des Rohres der Flüssigkeitszuführung 1 zu der Flachstrahldüse befindet sich ein Element zur Mengenregulierung 2. Diese Mengenregulierung 2 ist bei dieser Ausführungsform in Form einer Blende vorgesehen, die die durchtretende Flüssigkeitsmenge reguliert. Nach dem Durchtritt der Flüssigkeit durch die Mengenregulierung 2 gelangt die Flüssigkeit in die Flachstrahldüse 3. Diese Flachstrahldüse 3 erzeugt den Flachstrahl 5, der im Auftreffwinkel (α) 6 auf ein an dem Flüssigkeitsverteiler angeordnetes Ablaufelement 4 trifft. Das Ablaufelement 4 ist bei dieser Ausführungsform in der Gestalt eines am Flüssigkeitsverteiler angeordneten Leitblechs vorgesehen, das sich von knapp oberhalb der Flachstrahldüse 3 nach unten erstreckt, wobei das Leitblech in Richtung des Flachstrahls leicht angestellt ist. Hierdurch ergibt sich zwischen der Breitseite des senkrecht nach unten gerichteten Flachstrahls 3 und der nach innen gerichteten Oberfläche des als Ablaufelement 4 vorgesehenen Leitblechs ein Auftreffwinkel (α) 6.

Das als Leitblech vorgesehene Ablaufelement 4 schirmt die eine Seite des Flachstrahles gegenüber dem Kolonneninnenraum ab, und auf der gegenüberliegenden Seite wird der Flachstrahl 5 bei der hier vorliegenden Ausführungsform von dem als zusätzliche Abschirmfläche 7 vorgesehenen Abschirmblech gegenüber dem Kolonneninnenraum abgeschirmt. Die Fläche des Abschirmblechs 7 erstreckt sich bei der hier dargestellten Ausführungsform über die gesamte Strecke des Flachstrahls inklusive der Strecke über die der Flachstrahl an dem Ablaufelement 4 herunterrennt.

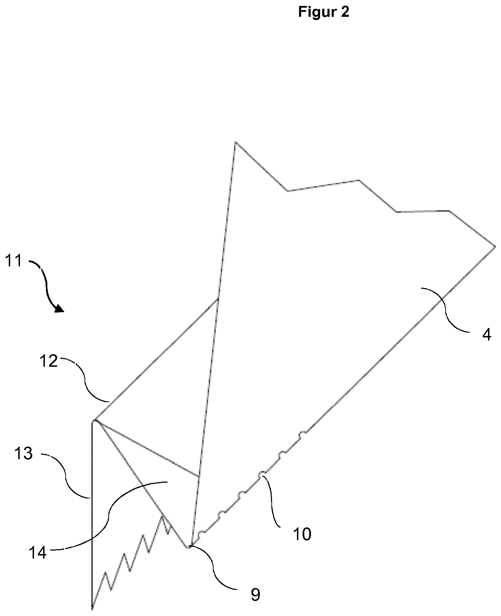

Am unteren Ende schließt sich an das Leitblech des Ablaufelements 4 bei der hier dargestellten Ausführungsform eine speziell gestaltete Flüssigkeitsaufgabe 11 an, und ein Detail dieser Flüssigkeitsaufgabe 11 der hier dargestellten Ausführungsform ist in der nachfolgenden Figur 2 dargestellt.

In Figur 2 ist eine Flüssigkeitsaufgabe 11 dargestellt, wie sie bei manchen Ausführungsformen der vorliegenden Erfindung realisiert werden kann, beispielsweise bei der in Figur 1 dargestellten Ausführungsform. Am unteren Ende des Leitblechs des Ablaufelements 4 ist das Leitblech bei dieser Ausführungsform ein Stück weit nach oben gebogen, um so eine Rinne 9 zu bilden, die als Längsaustauschelement der Vergleichmäßigung eines möglicherweise nicht vollständig homogenen Flachstrahls dient. In der Rinne kann sich nämlich die am Leitblech des Ablaufelements 4 ablaufende Flüssigkeit sammeln und dabei in Längsrichtung gleichmäßig verteilen. Hat das Niveau der in der Rinne 9 angesammelten Flüssigkeit 14 die Höhe der Überlaufkante 12 erreicht, kann die Flüssigkeit 5 über die sich anschließende Abtropffläche 13 ablaufen und an der Unterkante dieser Abtropffläche 13 abtropfen. Bei der hier dargestellten Ausführungsform ist die Unterkante der Abtropffläche 13 zackig ausgestaltet, um ein leichteres Abtropfen von Flüssigkeiten mit besonders hoher Kohäsionskraft, wie z. B. Wasser, zu erleichtern.

Optional kann bei der hier dargestellten Ausführungsform am tiefsten Punkt der Rinne 9 eine Lochung 10 vorgesehen sein, durch die ebenfalls Flüssigkeit aus dem erfindungsgemäßen Flüssigkeitsverteiler abtropfen kann. Diese Lochung 10 muss nicht zwingend am tiefsten Punkt der Rinne 9 vorgesehen sein, dies ist jedoch zweckmäßig, um das vollständige Ablaufen der Flüssigkeit zu gewährleisten, wenn die Flüssigkeitsaufgabe beendet werden soll.

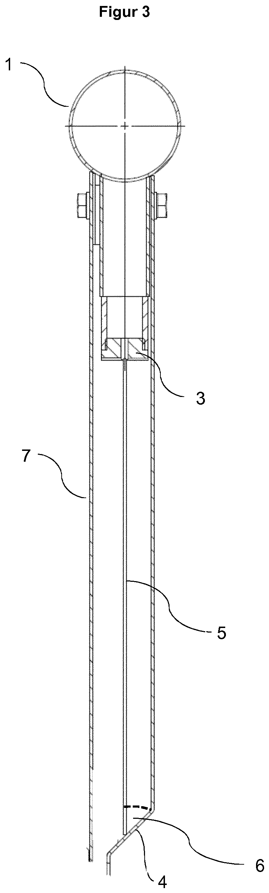

In Figur 3 ist eine weitere Ausführungsform der vorliegenden Erfindung dargestellt. Auch hier erfolgt die Bereitstellung der aufzugebenden Flüssigkeit über die Flüssigkeitszuführung 1, welche die Flüssigkeit an die Flachstrahldüse 3 weiterleitet. Im Gegensatz zu der in Figur 1 dargestellten Ausführungsform verläuft bei dieser Ausführungsform das als Ablaufelement 4 vorgesehene Leitblech zunächst senkrecht und parallel zum Flachstrahl 5. Erst ganz am Ende des Leitbleches knickt dieses in Richtung des Flachstrahles 5 ab und bildet mit dem senkrecht nach unten ausgerichteten Flachstrahl 5 den Auftreffwinkel (α) 6. Im Anschluss an den Bereich, in dem der Flachstrahl 5 auf das Leitblech auftrifft, knickt das Leitblech noch einmal senkrecht nach unten ab und bildet am untersten Ende eine Abtropfkante von der die am Leitblech ablaufende Flüssigkeit abtropfen kann.

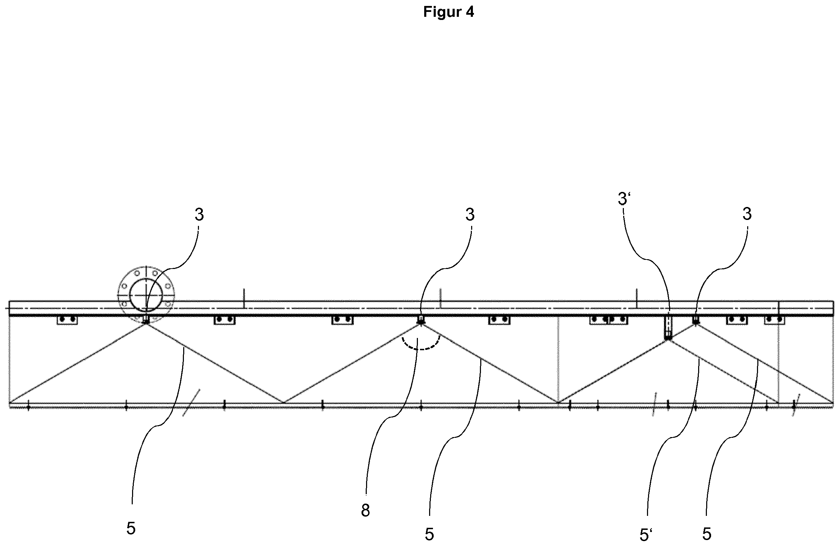

In Figur 4 ist eine Reihenanordnung von Flachstrahldüsen 3 bei einer bestimmten Ausführungsform der vorliegenden Erfindung dargestellt. Im Einzelnen sind drei Flachstrahldüsen 3 dargestellt, die im erfindungsgemäßen Flüssigkeitsverteiler so angeordnet sind, dass deren Flachstrahlen 5 in Längsrichtung auf einer Linie liegen, wobei der Spritzwinkel (β) 8 so gewählt ist, dass die Flachstrahlen 5 von zwei benachbarten Flachstrahldüsen 3 an der Stelle, an der sie auf das Ablaufelement 4 treffen, sich berühren. Auf diese Weise entsteht ein durchgängiger Flüssigkeitsfilm, der am unteren Ende des Ablaufelements 4 über die gesamte Strecke der Flachstrahldüsenreihe auf einer Linie abtropfen kann. Am Beispiel der als Alternative 3' dargestellten Flachstrahldüse wird aufgezeigt, wie sich die Breite des Flachstrahles durch Auswahl mehr oder weniger langer Flachstrahldüsen variieren lässt. Der Spritzwinkel (β) 8 liegt vorzugsweise in einem Bereich von 30° bis 150°.

### Bezugszeichenliste:

- 1: Flüssigkeitszuführung
- 2: Mengenregulierung
- 3, 3': Flachstrahldüsen
- 4: Ablaufelement
- 5, 5': Flachstrahl
- 6: Auftreffwinkel (α)
- 7: Abschirmfläche
- 8: Spritzwinkel (β)
- 9: Rinne
- 10: Lochung
- 11: Flüssigkeitsaufgabe
- 12: Überlaufkante
- 13: Abtropffläche
- 14: Flüssigkeit

## Patentansprüche

1. Flüssigkeitsverteiler einer verfahrenstechnischen Kolonne, wobei der Flüssigkeitsverteiler eine Flüssigkeitszuführung (1) zum Leiten einer Flüssigkeit und wenigstens 2 damit verbundene Düsen (3) zur Erzeugung jeweils eines Flüssigkeitsstrahls (5) aufweist, wobei die Düsen Flachstrahldüsen (3) zur Erzeugung jeweils eines Flachstrahls (5) mit einer Breitseite und einer Schmalseite sind, **dadurch gekennzeichnet, dass** an dem Flüssigkeitsverteiler ein Ablaufelement (4) angeordnet ist, das integraler Bestandteil des Flüssigkeitsverteilers ist, wobei die Flachstrahldüsen (3) so ausgerichtet sind, dass der von diesen erzeugte Flachstrahl (5) auf das am Flüssigkeitsverteiler angeordnete Ablaufelement (4) trifft, an dem die Flüssigkeit des Flachstrahls (5) ablaufen kann, wobei der Flachstrahl mit seiner Breitseite in einem Auftreffwinkel (α) in dem Bereich von 1° bis 75° auf die Oberfläche des Ablaufelements auftrifft.

2. Flüssigkeitsverteiler nach Anspruch 1, **dadurch gekennzeichnet, dass** das Ablaufelement eine Ablauffläche, ein poröses Material oder ein Packungselement ist.

3. Flüssigkeitsverteiler nach einem der Ansprüche 1 oder 2, **dadurch gekennzeichnet, dass** der Spritzwinkel (β), der an der Breitseite der Flachstrahldüsen erreicht wird, in dem Bereich von 30° bis 150° liegt.

4. Flüssigkeitsverteiler nach einem der Ansprüche 1 bis 3, **dadurch gekennzeichnet, dass** das Ablaufelement eine Ablauffläche ist, die ein horizontal verlaufendes Längsaustauschelement zum Längsaustausch des an der Ablauffläche ablaufenden Flüssigkeitsfilms aufweist.

5. Flüssigkeitsverteiler nach Anspruch 4, **dadurch gekennzeichnet, dass** das Längsaustauschelement eine Rinne (9), ein poröses Material oder ein Packungselement ist.

6. Flüssigkeitsverteiler nach einem der Ansprüche 1 bis 5, **dadurch gekennzeichnet, dass** der Volumenstrom V pro Minute bei einem Druck p von 1 bar 0,2 bis 20 l/min/Düse beträgt.

7. Flüssigkeitsverteiler nach einem der Ansprüche 1 bis 6, **dadurch gekennzeichnet, dass** die Anzahl der Flachstrahldüsen in dem Bereich von 1 bis 20 Flachstrahldüsen pro m² Kolonnenquerschnitt liegt.

8. Flüssigkeitsverteiler nach einem der Ansprüche 1 bis 7, **dadurch gekennzeichnet, dass** daran wenigstens ein Abschirmelement vorgesehen ist, welches wenigstens eine Breitseite des Flachstrahls (5) gegenüber der Umgebung abschirmt.

9. Flüssigkeitsverteiler nach Anspruch 8, **dadurch gekennzeichnet, dass** das Abschirmelement ein Abschirmfläche (7), ein poröses Abschirmmaterial oder ein Abschirmpackungselement ist.

10. Flüssigkeitsverteiler nach einem der Ansprüche 1 bis 9, **dadurch gekennzeichnet, dass** der von der Flachstrahldüse (3) erzeugte Flachstrahl (5) auf der einen Seite mit seiner Breitseite in einem Auftreffwinkel (α) in dem Bereich von 1° bis 60° auf ein als Ablaufelement vorgesehenes Leitblech (4) trifft, wobei die gegenüberliegende Seite des Flachstrahls (5) vorzugsweise zusätzlich von einem Abschirmblech (7) gegenüber dem Kolonneninnenraum abgeschirmt wird.

11. Flüssigkeitsverteiler nach einem der Ansprüche 1 bis 10, bei dem die Flachstrahldüsen in wenigstens einer Reihe angeordnet sind, wobei die Flachstrahldüsen in der wenigstens einen Reihe so ausgerichtet sind, dass die Längsseiten der von diesen erzeugten Flachstrahlen auf einer Linie verlaufen.

12. Flüssigkeitsverteiler nach einem der Ansprüche 1 bis 11, bei dem die vertikale Differenz zwischen der Höhe der Düsenaustrittsöffnung und der Höhe des geometrischen Mittelpunkts der Querschnittsfläche des auf das Ablaufelement auftreffenden Flachstrahles liegt in dem Bereich von 5 bis 80 cm liegt.

13. Verfahrenstechnische Kolonne umfassend einen Flüssigkeitsverteiler nach einem der Ansprüche 1 bis 12.

14. Verfahren zum Aufreinigen oder Auftrennen eines Flüssigkeitsgemisches mittels in einer verfahrenstechnischen Kolonne angeordneten Packungen oder Füllkörpern, wobei das aufzureinigende oder aufzutrennende Flüssigkeitsgemisch auf die Packungen oder Füllkörper über einen Flüssigkeitsverteiler nach einem der Ansprüche 1 bis 12 aufgegeben wird.

15. Flüssigkeitsverteiler nach einem der Ansprüche 1 bis 12, Kolonne nach Anspruch 13 oder Verfahren nach Anspruch 14, wobei die verfahrenstechnische Kolonne eine Kolonne zur thermischen Trennung von Flüssigkeitsgemischen ist.

## Claims

1. A liquid distributor of a process-technology column, wherein the liquid distributor has a liquid feed (1) for conducting a liquid and at least 2 nozzles (3) connected thereto for producing a respective liquid jet (5), wherein the nozzles are flat-jet nozzles (3) for producing a respective flat jet (5) with a wide side and a narrow side, **characterized in that** a down-running element (4) is arranged at the liquid distributor, which is an integral part of the liquid distributor, wherein the flat-jet nozzles (3) are so oriented that the flat jet (5) produced by them impinges on the down-running element (4) which is arranged at the liquid distributor, and at which the liquid of the flat jet (5) can run down, wherein the flat jet impinges with its wide side at an impingement angle (α) in the range of between 1 ° and 75° on the surface of the down-running element.

2. A liquid distributor as set forth in claim 1 **characterised in that** the down-running element is a down-running surface, a porous material or a packing element.

3. A liquid distributor as set forth in one of claims 1 or 2 **characterised in that** the spray angle (β) which is achieved at the wide side of the flat-jet nozzles is in the range of between 30° and 150°.

4. A liquid distributor as set forth in one of claims 1 through 3 **characterised in that** the down-running element is a down-running surface which has a horizontally extending longitudinal exchange element for longitudinal exchange of the liquid film running down at the down-running surface.

5. A liquid distributor as set forth in claim 4 **characterised in that** the longitudinal exchange element is a channel (9), a porous material or a packing element.

6. A liquid distributor as set forth in one of claims 1 through 5 **characterised in that** the volume flow V per minute at a pressure p of 1 bar is between 0.2 and 20 l/min/nozzle.

7. A liquid distributor as set forth in one of claims 1 through 6 **characterised in that** the number of flat-jet nozzles is in the range of between 1 and 20 flat-jet nozzles per m² of column cross-section.

8. A liquid distributor as set forth in one of claims 1 through 7 **characterised in that** there is provided thereon at least one shielding element which shields at least a wide side of the flat jet (5) with respect to the surroundings.

9. A liquid distributor as set forth in claim 8 **characterised in that** the shielding element is a shielding surface (7), a porous shielding material or a shielding packing element.

10. A liquid distributor as set forth in one of claims 1 through 9 **characterised in that** the flat jet (5) produced by the flat-jet nozzle (3) impinges on the one side with its wide side at an impingement angle (α) in the range of between 1° and 60° on a guide plate (4) provided as the down-running element, wherein the opposite side of the flat jet (5) is preferably additionally shielded by a shielding plate (7) with respect to the column interior.

11. A liquid distributor as set forth in one of claims 1 through 10 in which the flat-jet nozzles are arranged in at least one row, wherein the flat-jet nozzles in the at least one row are so oriented that the longitudinal sides of the flat jets produced by them extend on a line.

12. A liquid distributor as set forth in one of claims 1 through 11 in which the vertical difference between the height of the nozzle outlet opening and the height of the geometrical center point of the cross-sectional area of the flat jet incident on the down-running element is in the range of between 5 and 80 cm.

13. A process-technology column including a liquid distributor as set forth in one of claims 1 through 12.

14. A method of purifying or separating a liquid mixture by means of packings or filling bodies disposed in a process-technology column, wherein the liquid mixture to be purified or separated is passed on to the packings or filling bodies by way of a liquid distributor as set forth in one of claims 1 through 12.

15. A liquid distributor as set forth in one of claims 1 through 12, a column as set forth in claim 13 or a method as set forth in claim 14 wherein the process-technology column is a column for thermal separation of liquid mixtures.

## Revendications

1. Distributeur de liquide d'une colonne technologique, le distributeur de liquide comprenant une amenée de liquide (1) pour amener un liquide et au moins deux buses (3) reliées à celle-ci pour réaliser, chacune, un jet de liquide (5), les buses étant des buses à jet plat (3) pour produire, chacune, un jet plat (5) ayant une face large et une face mince, **caractérisé en ce qu'**il est disposé sur le distributeur de liquide un élément d'écoulement (4) qui est partie intégrante du distributeur de liquide, les buses à jet plat (3) étant orientées de façon que le jet plat (5) produit par celles-ci arrive sur l'élément d'écoulement (4) disposé sur le distributeur de liquide, duquel élément le liquide du jet plat (5) peut s'écouler, le jet plat arrivant par sa face large sur la surface de l'élément d'écoulement sous un angle d'incidence (α) d'une plage de 1° à 75°.

2. Distributeur de liquide selon la revendication 1, **caractérisé en ce que** l'élément d'écoulement est une surface d'écoulement, un matériau poreux ou un élément de garnissage.

3. Distributeur de liquide selon la revendication 1 ou 2, **caractérisé en ce que** l'angle de projection (β) qui est obtenu sur la face large, est dans la plage de 30° à 150°.

4. Distributeur de liquide selon l'une des revendications 1 à 3, **caractérisé en ce que** l'élément d'écoulement est une surface d'écoulement qui comprend un élément d'échange longitudinal s'étendant horizontalement, pour un échange longitudinal du film de liquide s'écoulant sur la surface d'écoulement.

5. Distributeur de liquide selon la revendication 4, **caractérisé en ce que** l'élément d'échange longitudinal est une rigole (9), un matériau poreux ou un élément de garnissage.

6. Distributeur de liquide selon l'une des revendications 1 à 5, **caractérisé en ce que** le flux volumique V par minute, à une pression p de 1 bar, est de 0,2 à 20 l/min/buse.

7. Distributeur de liquide selon l'une des revendications 1 à 6, **caractérisé en ce que** le nombre de buses à jet plat est dans la plage de 1 à 20 buses à jet plat par m² de section transversale de colonne.

8. Distributeur de liquide selon l'une des revendications 1 à 7, **caractérisé en ce qu'**il est prévu au moins un élément faisant écran qui protège une face large du jet plat (5) contre les alentours.

9. Distributeur de liquide selon la revendication 8, **caractérisé en ce que** l'élément faisant écran est une surface d'écran (7), un matériau poreux faisant écran ou un élément de garnissage faisant écran.

10. Distributeur de liquide selon l'une des revendications 1 à 9, **caractérisé en ce que** le jet plat (5) produit par la buse à jet plat (3) atteint sur un côté, par sa face large sous un angle d'incidence (α) dans la plage de 1° à 60°, une tôle de guidage (4) prévue comme élément d'écoulement, le côté opposé du jet plat (5) étant protégé de l'espace intérieur de la colonne de préférence en outre par une tôle faisant écran (7).

11. Distributeur de liquide selon l'une des revendications 1 à 10, dans lequel les buses à jet plat sont disposées en au moins une rangée, les buses à jet plat étant orientées dans ladite au moins une rangée de façon que les faces longitudinales des jets plats produits par celles-ci s'étendent sur une ligne.

12. Distributeur de liquide selon l'une des revendications 1 à 11, dans lequel la différence verticale entre la hauteur de la sortie de buse et la hauteur du centre géométrique de l'aire de la section transversale du jet plat arrivant sur l'élément d'écoulement est dans la plage de 5 à 80 cm.

13. Colonne technologique comprenant un distributeur de liquide selon l'une des revendications 1 à 12.

14. Procédé de nettoyage ou de séparation d'un mélange de liquides à l'aide de garnissages ou de corps de remplissage, le mélange de liquides destiné à être nettoyé ou séparé étant amené sur les garnissages ou corps de remplissage via un distributeur de liquide selon l'une des revendications 1 à 12.

15. Distributeur de liquide selon l'une des revendications 1 à 12, colonne selon la revendication 13 ou procédé selon la revendication 14, la colonne technologique étant une colonne pour la séparation thermique de mélanges de liquides.
